# EUROPEAN PATENT SPECIFICATION

(11) **EP 1 267 562 B1**
(45) Date of publication and mention of the grant of the patent: **28.03.2007**
(21) Application number: 02254091.8
(22) Date of filing: 12.06.2002
(51) Int. Cl.: H04N 1/333

(54) **Data processing apparatus, software program and data processing method to be applied to the apparatus**
Datenverarbeitungsgerät, Softwareprogramm und Datenverarbeitungsverfahren zum Gebrauch beim Gerät
Dispositif de traitement de données, programme logiciel et procédé de traitement de données destinés à être appliqués au dispositif

(30) Priority: 12.06.2001 JP 2001177644
(43) Date of publication of application: 18.12.2002
(73) Proprietor: Ricoh Company, Ltd., Tokyo 143-8555 (JP)
(72) Inventor: Orikasa, Noriaki, Atsugi-shi, Kanagawa (JP)
(74) Representative: Senior, Alan Murray

(56) References cited:
- EP-A- 0 535 818
- EP-A- 0 574 910
- EP-A- 0 660 582
- EP-A- 1 094 661
- US-A- 5 387 984
- US-A- 5 576 849

## Description

The present invention relates to a data processing apparatus having facsimile functions capable of connecting with a LAN and accessing other terminal apparatuses, such as a copying machine, printer and the like, a data processing method for performing the functions of the apparatus, and a software program causing a computer to perform the functions.

There are many data processing apparatuses such as copying machines, printers, facsimile machines and the like that perform facsimile functions that can handle color image data these days. Each of these data processing apparatuses includes a color scanner for reading color images and a plotter for performing color printing. These data processing apparatuses are very useful in transmitting/receiving graphical images.

However, on the other hand, data processing apparatuses performing so-called monochrome type facsimile functions (referred to as "monochrome data processing apparatuses", hereinafter) that have no functions for processing color image data are actually being used in the market. Further, although various data processing apparatuses that can handle color image data (referred to as "color data processing apparatuses", hereinafter) are currently being introduced, there are still many cases of newly installing monochrome data processing apparatuses. Thus, it is concluded that demand for the monochrome data processing apparatuses still remains.

However, there is a new problem concerning communication these days since both color data processing apparatuses and monochrome data processing apparatuses are used together in common on communication networks. That is, the monochrome data processing apparatuses do not accept color copy data transmitted from the color data processing apparatuses. However, an operator of the color data processing apparatus does not usually know all the types of data processing apparatuses at the many transmission destinations. Additionally, not all operators know that the monochrome data processing apparatuses do not accept color image data. Accordingly, in many cases, the operator of the color data processing apparatuses cannot understand the reason why the transmission cannot be successfully completed when the operator transmits color image data to a transmission destination that has a monochrome data processing apparatus.

Figure 29 of EP 0,660,582 discloses an image receiving apparatus which can determine if received data is color image data or monochrome image data and which accordingly sets a printer unit to a color or monochrome printing mode respectively.

It is a general object of the present invention to provide an improved and useful data processing apparatus, a data processing method for performing the functions of the apparatus, and a software program causing a computer to perform the functions by which the above-mentioned problems can be solved.

A more specific object of the present invention is to provide a data processing apparatus, a data processing method for performing the functions of the apparatus, and a software program causing a computer to perform the functions that can accept color image data and transfer the color image data to an output unit such as a display unit, printer and the like that is capable of outputting the color image data and is connected to the data processing apparatus via a LAN so that the output unit thereof can output the color image data.

In other words, the more specific object of the present invention is to provide a data processing apparatus, a data processing method for performing the functions of the apparatus, and a software program causing a computer to perform the functions that can sustain the cost-saving characteristic of the monochrome data processing apparatus and aim for further improving the convenience of the monochrome data processing apparatus by enabling the monochrome data processing apparatus to accept and transfer color image data to another terminal apparatus capable of outputting the color image data so that the terminal apparatus thereof can output the color image data.

In order to achieve the above-mentioned objects, there is provided according to one aspect of the present invention, a data processing apparatus having facsimile functions, including: a data determination part that determines whether received data are color image data or monochrome image data; an output switching part that selects a terminal apparatus to which output is made according to a decision result of the data determination part; a color data transfer part that transfers color image data to the selected terminal apparatus capable of printing a color image when the data determination part determines the received data are color image data; and a printing part that prints a monochrome image based on monochrome image data when the data determination part determines the received data are monochrome image data.

According to the above-mentioned aspect of the present invention, the data determination part determines whether the received data are color image data or monochrome image data. Then, according to a decision result, the output switching part selects a terminal apparatus to which output is made. When the determination part determines that the received data are the color image data, the color data transfer part transfers the color image data to a terminal apparatus that is connected to a LAN and can output color image data. Thereafter, the terminal apparatus outputs the color image data. For this reason, it is possible to provide a data processing apparatus that has improved convenience as having a cost-saving effect the same as that obtained in a case where the monochrome data processing apparatus is applied.

Other objects, features and advantages of the present invention will become more apparent from the following detailed description when read in conjunction with the following drawings.
FIG. 1 is a block diagram showing a system structure of a data processing apparatus according to the present invention;
FIG. 2 is a schematic diagram illustrating how the data processing apparatus is connected via a LAN; and
FIG. 3 is a flow chart for explaining a sequence of an operation performed by the data processing apparatus.

In the following, a detailed description will be given of an embodiment of the present invention, by referring to the drawings.

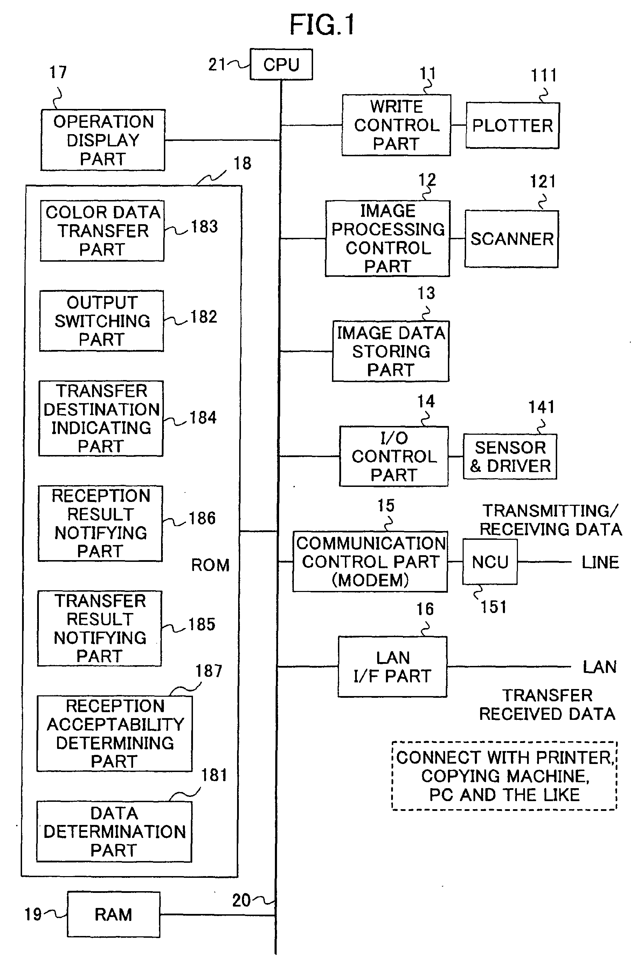

As shown in FIG. 1, a data processing apparatus according to this embodiment includes a write control part 11, an image processing control part 12, an image data storing part 13, an I/O control part 14, a communication control part (modem) 15, a LAN I/F part 16, an operation display part 17, a ROM 18, a RAM 19 and a CPU 21. The above-mentioned parts, write control part 11 through RAM 19, are connected to the CPU 21 via a bus 20.

The write control part 11 controls a plotter 111 that performs printing based on monochrome image data. The image processing control part 12 controls a scanner 121 for reading desired data and processes signals from the scanner 121 as monochrome image data. The image data storing part 13 stores monochrome image data generated through the scanner 121 and color image data that are received. The I/O control part 14 controls a sensor & driver 141. The communication control part 15 incorporates a NCU 151, transmits a dial signal for calling a party and connects with a public network. The LAN I/F part 16 connects with a local area network. The operation display part 17 displays a required key input, such as a telephone number, and information. The ROM 18 stores predetermined software programs. Predetermined data are read from and written to the RAM 19. Additionally, the CPU 21 controls the data processing apparatus so that operations are performed based on the predetermined software programs.

Further, the ROM 18 stores the software programs for causing the data processing apparatus to function as a data determination part 181, an output switching part 182, a color data transfer part 183, a transfer destination indicating part 184, a transfer result notifying part 185, a reception result notifying part 186, and a reception acceptability determining part 187, in addition to steps for realizing normal facsimile functions. A detailed description thereof will be made later.

In addition, the RAM 19 stores address information of arbitrary transfer destinations that are previously set. At the same time, the RAM 19 stores various items of information when the data processing apparatus receives color image data, that is, transfer result information, transmitting source information, output information that is to be transmitted to the transmitting source, and the like.

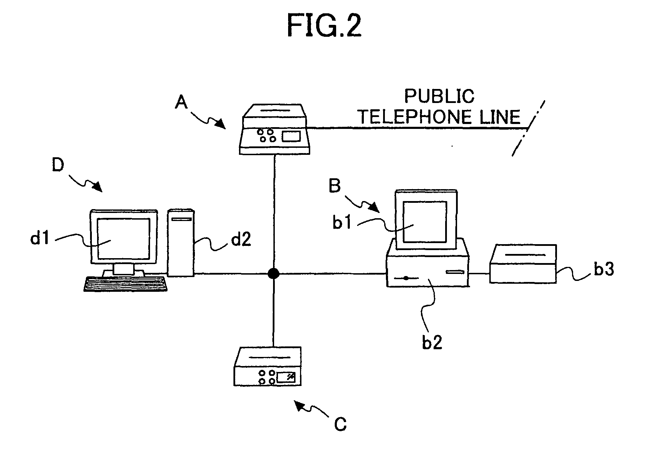

FIG. 2 illustrates a general configuration of a LAN that includes a central unit A, a terminal apparatus B, a terminal apparatus C, and a terminal apparatus D that are mutually connected via a well-known LAN technique. The central unit A is the data processing apparatus according to the embodiment of the present invention. The terminal apparatus B includes a color display unit b1, a computer body b2, and a color printer b3. The terminal apparatus C is a color printer that can directly connect with the LAN. The terminal apparatus D includes a color display unit d1 and a computer body d2. The LAN is configured such that each of the units can perform two-way communication with one another. Further, in this embodiment, it is assumed that a user of the terminal apparatus D manages the central unit A (data processing apparatus).

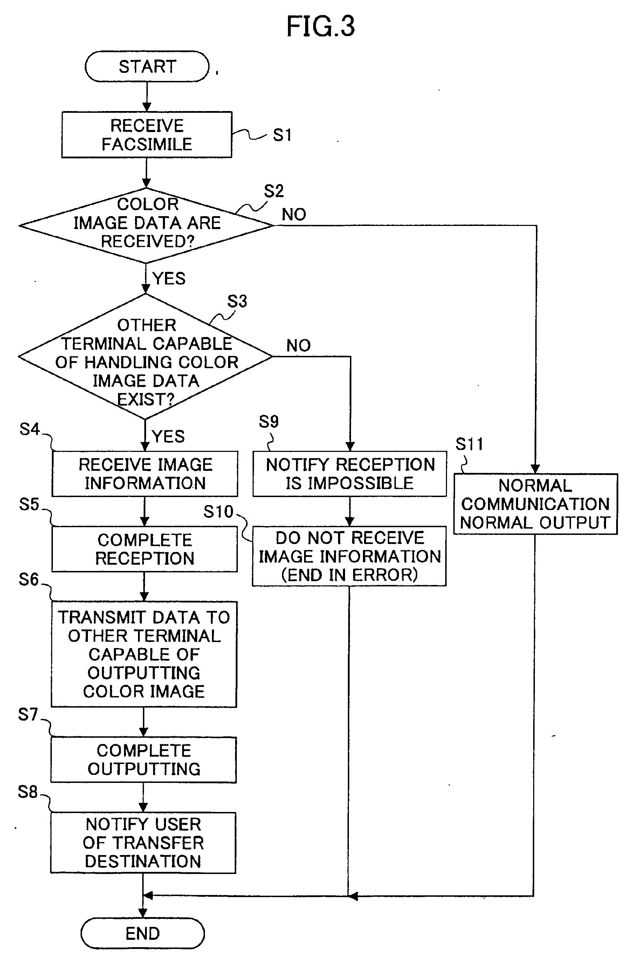

Next, referring to FIG. 3, a description will be given of a sequence of operations of the data processing apparatus according to this embodiment.

First, in step S1, the data processing apparatus starts an operation of receiving a facsimile when the communication control part (modem) 15 incorporating the NCU 151 detects a ringing signal that corresponds to a calling signal.

Then, in step S2, the data determination part 181 determines whether received data are color image data or monochrome image data. It should be noted that, in a flow chart of FIG. 3, the operations are divided into two types after step S2: a color image processing side (steps S3 through S10) and a monochrome image processing side (step S11). When it is determined that color image data are received (YES in step S2), the output switching part 182 switches the operation to the color image processing side, and the operation is continued to step S3. In step S3, the reception acceptability determining part 187 searches the LAN so as to find a terminal apparatus that is connected via the LAN I/F part 16 and is capable of outputting the color image data.

In this case, the search is performed according to an order of addresses that are previously recorded in the RAM 19. For example, in FIG. 2, the central unit (data processing apparatus) A accesses the terminal apparatus B first, according to a clockwise rotation. At this moment, the central unit A determines whether or not the color display unit b1 or the color printer b3 are currently being used. When it is determined that the color display unit b1 or the color printer b3 are being used, the central unit A subsequently accesses the terminal apparatus C. Similarly, the central unit A determines whether or not the terminal apparatus C is currently being used. When it is also determined that the terminal apparatus C is currently being used, the central unit A subsequently further accesses the terminal apparatus D. Then, the central unit A determines whether or not the terminal apparatus D is currently being used. In this case, when no terminal apparatus that can output color image data is available (NO in step S3), the operation is continued to step S9. However, in the following, an explanation will be given assuming that the terminal apparatus C is available.

When the reception acceptability determining part 187 determines that the terminal apparatus C is available (YES in step S3), in step S4, the data processing apparatus A starts receiving the color image data. The color image data are gradually stored in the image data storing part 13. In step S5, the reception of the color image data completes at the same time that the storing of the color image data is completed.

When the color image data have been stored in the image data storing part 13, in step S6, the data processing apparatus starts accessing the terminal apparatus C using the color data transfer part 183 so as to transfer the color image data.

On the other hand, in step S7, the terminal apparatus C completes printing out a color image based on the color image data that are transferred from the data processing apparatus A.

When the terminal apparatus C has completed printing out the color image, in step S8, the data processing apparatus A displays information that the color image has been output. The information is displayed to the operation display part 17 by the transfer destination indicating part 184.

At the same time, in step S8, the data processing apparatus A starts accessing the terminal apparatus D using the transfer result notifying part 185 so as to notify the terminal apparatus D that the terminal apparatus C has completed outputting the color image. Thereby, the user of the terminal apparatus D who is in charge of managing the data processing apparatus A can specify information of transmitting source and location (terminal apparatus) where the color image data have been output.

Additionally, in step S2, when the data determination part 181 determines that the received data are monochrome image data (NO in step S2), the operation is continued to step S11. In step S11, the data processing apparatus A starts normally receiving the monochrome image data and causes the image data storing part 13 to record the monochrome image data. The plotter 111 prints out a monochrome image based on the monochrome image data and the operation ends.

Further, in step S3, when no terminal apparatus that can handle color image data is available (NO in step S3), the operation is continued to step S9. In step S9, the reception result notifying part 186 notifies the transmitting source that it is impossible to receive the color image data. Thereafter, in step S10, the operation ends without receiving image information (the color image data).

In other words, the present invention as described above includes the following structure.

First, according to one aspect of the present invention, there is provided the data processing apparatus having facsimile functions and being connected with a LAN, including the data determination part 181 that determines whether received data are color image data or monochrome image data; the output switching part 182 that selects a terminal apparatus to which output is made according to a decision result of the data determination part 181; the color data transfer part 183 that transfers color image data to the selected terminal apparatus capable of printing a color image when the data determination part 181 determines the received data are color image data; and a printing part that prints a monochrome image based on monochrome image data when the data determination part 181 determines the received data are monochrome image data.

According to the above-mentioned aspect of the present invention, the data processing apparatus A starts a receiving operation when a ringing signal is detected and an offhook state is created. The data determination part 181 determines whether the received data are color image data or monochrome image data. According to this decision result, the output switching part 182 switches the terminal apparatus to which the relevant image data are output. When the received data are monochrome image data, the received data are output by the data processing apparatus A thereof. On the other hand, when the received data are color image data, image information is accumulated in an image memory, and the communication temporarily ends. Thereafter, the color data transfer part 183 transfers the color image data to a terminal apparatus that is connected to the LAN (local area network) and is capable of outputting a color image: a color printer, color copying machine, a display unit that can display a color image and included in a personal computer, and the like. Thereby, the terminal apparatus can output the received color image data.

That is, the data determination part 181 determines whether the received data are color image data or monochrome image data. Then, according to the decision result, the output switching part 182 selects the terminal apparatus to which output is made. When the received data are color image data, the color data transfer part 183 transfers the color image data to the terminal apparatus that is connected to the LAN and is capable of outputting a color image, and the terminal apparatus thereof outputs the color image data. For this reason, it is possible to provide a data processing apparatus that has improved convenience while sustaining the cost-saving characteristic of the monochrome processing apparatus.

Additionally, according to another aspect of the present invention, the above-mentioned data processing apparatus A further includes a transfer destination indicating part 184 that indicates the terminal apparatus that receives the transferred color image data when the color data transfer part 183 transfers the color image data.

In a case where the color image data are transferred to another terminal apparatus connected to the LAN and are output by the terminal apparatus thereof, it is necessary to check all terminal apparatuses that are connected to the LAN in order to identify the terminal apparatus that has output the color image data. However, according to the above-mentioned aspect of the present invention, it is possible for the transfer destination display part 184 to indicate the transfer destination (terminal apparatus). As examples of this method, a method of printing out a transfer result by the data processing apparatus A, or a method of displaying the transfer result on the operation display part 17 can be conceived.

In short, when the received color image data are transferred to another terminal apparatus connected to the LAN and the terminal apparatus thereof has output the color image data, the transfer destination display part 184 indicates the terminal apparatus that outputs the color image data. Accordingly, it is possible to avoid checking all terminal apparatuses connected to the LAN in order to identify the terminal apparatus that has output the color image data.

Additionally, according to another aspect of the present invention, the data processing apparatus A further includes a transfer result notifying part 185 that transfers a transfer result to a predetermined computer connected to the data processing apparatus A via the LAN when the color data transfer part 183 transfers the color image data.

According to the above-mentioned aspect of the present invention, the transfer result is communicated to a personal computer, which a user or the like is using, through the LAN by using the transfer result notifying part 185 after the color image data are transferred to another terminal apparatus that is connected to the LAN and is capable of outputting a color image. For example, by the displaying of the transfer result on the display screen of the personal computer, the user can be informed of which terminal apparatus has output the color image data at once and without printing the transfer result on a sheet of paper.

Therefore, it is possible for a user who manages the data processing apparatus A to be informed of which terminal apparatus has output the color image at once and to easily check the received color image data.

In addition, according to another aspect of the present invention, the above-mentioned data processing apparatus A further includes a reception result notifying part 186 that detects whether or not an image is output based on the received color image data or received monochrome image data, and notifies a transmitting source of output information.

According to the above-mentioned aspect of the present invention, in a case where the data processing apparatus A receives color image data from a transmitting apparatus, the reception result notifying part 186 transmits information of the own apparatus to the transmitting apparatus in a process of information transfer according to a communication protocol. The transmitting apparatus that has transmitted the color image data checks the information and notifies the person who transmitted the color image data so that the person knows whether or not a party (the data processing apparatus A that receives the color image data) has output the color image data.

In a case where a terminal apparatus to which the color image data are transferred is in a state where it is impossible to output the color image data, the reception result notifying part 186 transmits information that it is impossible to output the color image data to the transmitting apparatus in the process of information transfer according to a communication protocol.

Thus, it is possible for the transmitting person to recognize a state of the party (data processing apparatus A that is to accept the transmitted color image data), since information of the own apparatus is transmitted to the transmitting side apparatus in the process of information transfer according to a communication protocol. Even if in a case where the terminal apparatus to which the color image data are transferred cannot output the color image data, information that the color image data cannot be output is transmitted to the transmitting apparatus. For this reason, the transmitting person can know that the color image data have not been output.

Further, according to another aspect of the present invention, the above-mentioned data processing apparatus A further includes a reception acceptability determining part 187 that determines whether or not outputting color image data is possible and prevents reception of the color image data when it is impossible to output the color image data.

According to the above-mentioned aspect of the present invention, when the reception acceptability part 187 determines that it is impossible to output the color image data even if the color image data are received, communication ends in an error instead of completing the communication. Therefore, it is not necessary to store image information that cannot be output, and a person who has transmitted the color image data recognizes that the transmission to the party has not been successful.

Accordingly, the communication is terminated in an error instead of completing the communication when the reception acceptability determining part 187 determines that it is impossible to output the color image data even when receiving the color image data. Thereby, the transmitting apparatus and person can recognize that the transmission to the party (data processing apparatus A) has not been successful. At the same time, it is possible to achieve an improved data processing apparatus by temporarily receiving the color image data although the apparatus cannot perform printing out thereof, and transferring it to another apparatus that can perform the same.

Additionally, according to another aspect of the present invention, there is provided a software program to cause a computer to perform a method of controlling a data processing apparatus having facsimile functions and being connected with a LAN, including the steps of: determining whether received data are color image data or monochrome image data (step S2); switching a terminal apparatus to which output is made according to a decision result of step S2; transferring color image data to another terminal apparatus capable of printing a color image when it is determined that the received data are color image data in step S2 (step S6); printing a monochrome image based on monochrome image data on a printing part in the data processing apparatus when it is determined that the received data are monochrome image data in step S2 (step S11); displaying a transfer destination of the color image data when the color image data are transferred in step S6 (step S8); transferring a transfer result to a predetermined computer connected to the data processing apparatus via a LAN when the color image data are transferred in step S6; detecting whether or not an image is output based on the received color image data or received monochrome image data, and notifying the transmitting source of output information; and determining whether or not outputting color image data is possible (step S3) and preventing reception when outputting the color image is impossible (step S9).

Additionally, according to another aspect of the present invention, there is provided a control method for a data processing apparatus having facsimile functions and being connected with a LAN, including the steps of; determining whether received data are color image data or monochrome image data (step S2); selecting a terminal apparatus to which output is made according to a decision result of step S2; transferring color image data to the selected terminal apparatus capable of printing a color image when it is determined that the received data are color image data in step S2 (step S6); printing a monochrome image based on monochrome image data on a printing part in the data processing apparatus when it is determined that the received data are monochrome image data in step S2 (step S11); indicating a transfer destination of the color image data when the color image data are transferred in step S6 (step S8); transferring a transfer result to a predetermined computer connected to the data processing apparatus via the LAN when the color image data are transferred in step S6; detecting whether an image is output based on the received color image data or received monochrome image data, and notifying the transmitting source of output information; and determining whether or not outputting color image data is possible (step S3) and preventing reception of color image data when outputting the color image data is impossible (step S9).

Further, the data processing apparatus may be configured such that the transfer destination display part 184 transmits color image data to the terminal apparatus C, and the plotter 111 that is included in the data processing apparatus A prints out information that the color image data have been output so as to notify an operator of the information when a unit that can output color image data and is connected to the LAN completes outputting the color image data. Additionally, the reception result notifying part 186 may be structured to also communicate the completion of receiving and outputting color image data irrespective of acceptability of the reception.

In addition, as another embodiment of the present invention, it is possible to record the software programs recorded in the ROM 18 of FIG. 1 on a removable recording medium such as a CD-ROM or the like. In this case, a CD-ROM drive or the like may be provided to the data processing apparatus A according to the present invention or a general-purpose computer. The software programs can be executed such that an incorporated CPU reads the software programs recorded on the removable recording medium through the CD-ROM drive or the like, and, thereby, the functions according to the present invention as described above with reference to FIGS. 1, 2 and 3 are realized by the CPU together with necessary functional parts. In a case of using the above-mentioned general-purpose computer that may not include facsimile functions and so forth, it is possible to realize the above-mentioned functions by combining the general-purpose computer and an apparatus that has a structure necessary for realizing facsimile functions capable of connecting with a LAN, and so forth. For example, the structure may include the write control part 11, plotter 111, image processing control part 12, scanner 121, image data storing part 13, I/O control part 14, sensor & driver 141, communication control part 15, NCU 151, LAN I/F part 16 and the like shown in FIG. 1.

Additionally, in the above, the explanation is given of embodiments of the data processing apparatus A. However, a software program and a data processing method that realize the operations of the data processing apparatus A may be conceived.

## Claims

1. A data processing apparatus having facsimile functions, **characterized by** comprising:
a data determination part (181) that determines whether received data are color image data or monochrome image data;
an output switching part (182) that selects a terminal apparatus to which output is made according to a decision result of the data determination part (181);
a color data transfer Dart (183) that transfers color image data to the selected terminal apparatus capable of printing a color image when the data determination part (181) determines the received data are the color image data; and
a printing part (111) that prints a monochrome image based on monochrome image data when the data determination part (181) determines the received data are the monochrome image data.

2. The data processing apparatus as claimed in claim 1, **characterized by** further comprising;
a transfer destination indicating part (184) that indicates the terminal apparatus that receives the transferred color image data when the color data transfer part (183) transfers the color image data.

3. The data processing apparatus as claimed in claim 1 or 2, **characterized by** further comprising:
a transfer result notifying part (185) that transfers a transfer result to a predetermined computer connected to the data processing apparatus when the color data transfer part (183) transfers the color image data.

4. The data processing apparatus as claimed in claim 1, 2 or 3, **characterized by** further comprising:
a reception result notifying part (186) that detects whether or not the image is output based on the received color image data or the received monochrome image data, and provides output information to a transmitting source.

5. The data processing apparatus as claimed in claim 1, 2, 3 or 4 **characterized by** further comprising:
a reception acceptability determining part (187) that determines whether or not outputting color image data is possible and prevents reception of the color image data when outputting the color image data is impossible.

6. A computer program comprising program code means that, when executed on a computer system instruct the computer system to perform a method of controlling a data processing apparatus having facsimile functions, **characterized by** comprising the steps of:
(a) determining whether received data are color image data or monochrome image data;
(b) selecting a terminal apparatus to which output is made according to a decision result of step (a);
(c) transferring color image data to said selected terminal apparatus capable of printing a color image when it is determined in step (a) that the received data are the color image data;
(d) printing a monochrome image based on monochrome image data on a printing part in the data processing apparatus when it is determined in step (a) that the received data are the monochrome image data;
(e) indicating a transfer destination of the color image data when the color image data are transferred in step (c);
(f) transferring a transfer result to a predetermined computer connected to the data processing apparatus when the color image data are transferred in step (c) ;
(g) detecting whether or not the image is output based on the received color image data or the received monochrome image data, and providing output information to a transmitting source; and
(h) determining whether or not outputting the color image data is possible and preventing reception of the color image data when outputting the color image data is impossible.

7. A data processing method for a data processing apparatus having facsimile functions, **characterized by** comprising the steps of;
(a) determining whether received data are color image data or monochrome image data;
(b) selecting a terminal apparatus to which output is made according to a decision result of step (a) ;
(c) transferring color image data to said selected terminal apparatus capable of printing a color image ' when it is determined in step (a) that the received data are the color image data;
(d) printing a monochrome image based on monochrome image data on a printing part in the data processing apparatus when it is determined in step (a) that the received data are the monochrome image data;
(e) indicating a transfer destination of the color image data when the color image data are transferred in step (c);
(f) transferring a transfer result to a predetermined computer connected to the data processing apparatus when the color image data are transferred in step (c) ;
(g) detecting whether or not the image is output based on the received color image data or the received monochrome image data, and providing output information to a transmitting source; and
(h) determining whether or not outputting the color image data is possible and preventing reception of the color image data when outputting the color image data is impossible.

## Patentansprüche

1. Datenverarbeitungsapparat, welcher Faxfunktionen aufweist, **dadurch gekennzeichnet, dass** er folgendes umfasst:
ein Datenbestimmungsteil (181), welches bestimmt, ob empfangene Daten Farbbilddaten oder einfarbige Bilddaten sind;
ein Ausgabe-Vermittlungsteil (182), welches ein Endgerät auswählt, an welches die Ausgabe entsprechend eines Entscheidungsergebnisses des Datenbestimmungsteils (181) erfolgt;
ein Farbdaten-Übertragungsteil (183), welches Farbbilddaten an das ausgewählte Endgerät überträgt, welches geeignet ist, ein Farbbild zu drucken, wenn das Datenbestimmungsteil (181) bestimmt, dass die empfangenen Daten die Farbbilddaten sind; und
ein Druckteil (111), welches ein einfarbiges Bild basierend auf einfarbigen Bilddaten druckt, wenn das Datenbestimmungsteil (181) bestimmt, dass die empfangenen Daten die einfarbigen Bilddaten sind.

2. Datenverarbeitungsapparat, wie in Anspruch 1 beansprucht, **dadurch gekennzeichnet, dass** er weiter folgendes umfasst:
ein Übertragungsziel-Anzeigeteil (184), welches das Endgerät anzeigt, welches die übertragenen Farbbilddaten empfängt, wenn das Farbdaten-Übertragungsteil (183) die Farbbilddaten überträgt.

3. Datenverarbeitungsapparat, wie in Anspruch 1 oder 2 beansprucht, **dadurch gekennzeichnet, dass** er weiter folgendes umfasst:
ein Übertragungsergebnis-Bekanntmachungsteil (185), welches ein Übedragungsergebnis an einen vorher festgelegten Computer überträgt, und welches mit dem Datenverarbeitungsapparat verbunden ist, wenn das Farbdaten-Übertragungsteil (183) die Farbbilddaten überträgt.

4. Datenverarbeitungsapparat, wie in Anspruch 1, 2 oder 3 beansprucht, **dadurch gekennzeichnet, dass** er weiter folgendes umfasst:
ein Empfangsergebnis-Bekanntmachungsteil (186), welches detektiert, ob oder ob nicht das Bild ausgegeben wird, und zwar basierend auf den empfangenen Farbbilddaten oder den empfangenen einfarbigen Bilddaten, und welches Ausgabeinformationen an eine übertragende Quelle bereitstellt.

5. Datenverarbeitungsapparat, wie in Anspruch 1,2,3 oder 4 beansprucht, **dadurch gekennzeichnet, dass** er weiter folgendes umfasst:
ein Empfangs-Akzeptanz-Bestimmungsteil (187), welches bestimmt, ob oder ob nicht Ausgeben von Farbbilddaten möglich ist, und welches den Empfang von Farbbilddaten verhindert, wenn Ausgeben von Farbbilddaten nicht möglich ist.

6. Computerprogramm, welches ein Programmcodemittel umfasst, das, wenn es auf einem Computersystem ausgeführt wird, das Computersystem anweist, ein Verfahren zur Steuerung eines Datenverarbeitungsapparates auszuführen, welcher, Faxfunktionen aufweist, und welches **dadurch gekennzeichnet ist, dass** es folgende Schritte umfasst:
(a) Bestimmen, ob empfangene Daten Farbbilddaten oder einfarbige Bilddaten sind;
(b) Auswählen eines Endgerätes, an welches eine Ausgabe entsprechend eines Entscheidungsergebnisses aus Schritt (a) gemacht wird;
(c) Übertragen von Farbbilddaten an das ausgewählte Endgerät, welches geeignet ist, ein Farbbild zu drucken, wenn in Schritt (a) bestimmt wird, dass die empfangenen Daten die Farbbilddaten sind;
(d) Drucken eines einfarbigen Bildes auf einem Druckteil in dem Datenverarbeitungsapparat, basierend auf einfarbigen Bilddaten, wenn in Schritt (a) bestimmt wird, dass die empfangenen Daten die einfarbige Bilddaten sind;
(e) Anzeigen eines Übertragungsziels der Farbbilddaten, wenn die Farbbilddaten in Schritt (c) übertragen werden;
(f) Übertragen eines Übertragungsergebnisses an einen vorher festgelegten Computer, welcher mit dem Datenverarbeitungsapparat verbunden ist, wenn die Farbbilddaten in Schritt (c) übertragen werden;
(g) Detektieren, ob oder ob nicht das Bild ausgegeben wird, und zwar basierend auf den empfangenen Farbbilddaten oder den empfangenen einfarbigen Bilddaten, und Bereitstellen von Ausgabeinformationen an eine Übertragungsquelle; und
(h) Bestimmen, ob oder ob nicht das Ausgeben der Farbbilddaten möglich ist und Verhindern des Empfangs von Farbbilddaten, wenn das Ausgeben von Farbbilddaten nicht möglich ist.

7. Datenverarbeitungsverfahren für einen Datenverarbeitungsapparat, welcher Faxfunktionen aufweist, und welches **dadurch gekennzeichnet ist, dass** es folgende Schritte umfasst:
(a) Bestimmen, ob empfangene Daten Farbbilddaten oder einfarbige Bilddaten sind;
(b) Auswählen eines Endgerätes, an welches eine Ausgabe entsprechend eines Entscheidungsergebnisses aus Schritt (a) gemacht wird;
(c) Übertragen der Farbbilddaten an das ausgewählte Endgerät, welches geeignet ist, ein Farbbild zu drucken, wenn in Schritt (a) bestimmt wird, dass die empfangenen Daten Farbbilddaten sind;
(d) Drucken eines einfarbigen Bildes auf einem Druckteil in dem Datenverarbeitungsapparat, basierend auf einfarbigen Bilddaten, wenn in Schritt (a) bestimmt wird, dass die empfangenen Daten einfarbige Bilddaten sind;
(e) Anzeigen eines Übertragungsziels der Farbbilddaten, wenn die Farbbilddaten in Schritt (c) übertragen werden;
(f) Übertragen eines Übertragungsergebnisses an einen vorher festgelegten Computer, welcher mit dem Datenverarbeitungsapparat verbunden ist, wenn die Farbbilddaten in Schritt (c) übertragen werden;
(g) Detektieren, ob oder ob nicht das Bild ausgegeben wird, und zwar basierend auf den empfangenen Farbbilddaten oder den empfangenen einfarbigen Bilddaten, und Bereitstellen von Ausgabeinformationen an eine Übertragungsquelle; und
(h) Bestimmen, ob oder ob nicht das Ausgeben der Farbbilddaten möglich ist und Verhindern des Empfangs von Farbbilddaten, wenn das Ausgeben von Farbbilddaten nicht möglich ist.

## Revendications

1. Dispositif de traitement de données ayant des fonctions de télécopieur, **caractérisé en ce qu'**il comprend :
une partie de détermination de données (181) qui détermine si des données reçues sont des données d'image en couleurs ou des données d'image monochrome ;
une partie de commutation de sortie (182) qui sélectionne un dispositif terminal vers lequel une sortie est effectuée en fonction d'un résultat de décision de la partie de détermination de données (181) ;
une partie de transfert de données de couleurs (183) qui transfère des données d'image en couleurs au dispositif terminal sélectionné capable d'imprimer une image en couleurs lorsque la partie de détermination de données (181) détermine que les données reçues sont les données d'image en couleurs ; et
une partie d'impression (111) qui imprime une image monochrome sur la base de données d'image monochrome lorsque la partie de détermination de données (181) détermine que les données reçues sont les données d'image monochrome.

2. Dispositif de traitement de données selon la revendication 1, **caractérisé en ce qu'**il comprend en outre :
une partie d'indication de destination de transfert (184) qui indique le dispositif terminal qui reçoit les données d'image en couleurs transférées lorsque la partie de transfert de données de couleurs (183) transfère les données d'image en couleurs.

3. Dispositif de traitement de données selon la revendication 1 ou 2, **caractérisé en ce qu'**il comprend en outre :
une partie de notification de résultat de transfert (185) qui transfère un résultat de transfert à un ordinateur prédéterminé connecté au dispositif de traitement de données lorsque la partie de transfert de données de couleurs (183) transfère les données d'image en couleurs.

4. Dispositif de traitement de données selon la revendication 1, 2 ou 3, **caractérisé en ce qu'**il comprend en outre :
une partie de notification de résultat de réception (186) qui détecte si, oui ou non, l'image est sortie sur la base des données d'image en couleurs reçues ou des données d'image monochrome reçues, et qui fournit des informations de sortie à une source d'émission.

5. Dispositif de traitement de données selon la revendication 1, 2, 3 ou 4, **caractérisé en ce qu'**il comprend en outre :
une partie de détermination d'acceptabilité de réception (187) qui détermine si, oui ou non, une sortie de données d'image en couleurs est possible et qui empêche la réception des données d'image en couleurs lorsque la sortie des données d'image en couleurs est impossible.

6. Programme d'ordinateur comprenant des moyens formant code de programme qui, lorsqu'il est exécuté sur un système d'ordinateur donne l'ordre au système d'ordinateur d'exécuter un procédé de commande d'un dispositif de traitement de données ayant des fonctions de télécopieur, **caractérisé en ce qu'**il comprend les étapes consistant à :
(a) déterminer si des données reçues sont des données d'image en couleurs ou des données d'image monochrome ;
(b) sélectionner un dispositif terminal vers lequel une sortie est effectuée en fonction d'un résultat de décision de l'étape (a) ;
(c) transférer des données d'image en couleurs audit dispositif terminal sélectionné capable d'imprimer une image en couleurs lorsqu'il est déterminé, à l'étape (a), que les données reçues sont les données d'image en couleurs ;
(d) imprimer une image monochrome sur la base de données d'image monochrome sur une partie d'impression dans le dispositif de traitement de données lorsqu'il est déterminé, à l'étape (a), que les données reçues sont les données d'image monochrome ;
(e) indiquer une destination de transfert des données d'image en couleurs lorsque les données d'image en couleurs sont transférées à l'étape (c) ;
(f) transférer un résultat de transfert à un ordinateur prédéterminé connecté au dispositif de traitement de données lorsque les données d'image en couleurs sont transférées à l'étape (c) ;
(g) détecter si, oui ou non, l'image est sortie sur la base des données d'image en couleurs reçues ou des données d'image monochrome reçues, et fournir des informations de sortie à une source d'émission ; et
(h) déterminer si, oui ou non, la sortie des données d'image en couleurs est possible et empêcher la réception des données d'image en couleurs lorsque la sortie des données d'image en couleurs est impossible.

7. Procédé de traitement de données pour un dispositif de traitement de données ayant des fonctions de télécopieur, **caractérisé en ce qu'**il comprend les étapes consistant à :
(a) déterminer si des données reçues sont des données d'image en couleurs ou des données d'image monochrome ;
(b) sélectionner un dispositif terminal vers lequel une sortie est effectuée en fonction d'un résultat de décision de l'étape (a) ;
(c) transférer des données d'image en couleurs audit dispositif terminal sélectionné capable d'imprimer une image en couleurs lorsqu'il est déterminé, à l'étape (a), que les données reçues sont les données d'image en couleurs ;
(d) imprimer une image monochrome sur la base de données d'image monochrome sur une partie d'impression dans le dispositif de traitement de données lorsqu'il est déterminé, à l'étape (a), que les données reçues sont les données d'image monochrome ;
(e) indiquer une destination de transfert des données d'image en couleurs lorsque les données d'image en couleurs sont transférées à l'étape (c) ;
(f) transférer un résultat de transfert à un ordinateur prédéterminé connecté au dispositif de traitement de données lorsque les données d'image en couleurs sont transférées à l'étape (c) ;
(g) détecter si, oui ou non, l'image est sortie sur la base des données d'image en couleurs reçues ou des données d'image monochrome reçues, et fournir des informations de sortie à une source d'émission ; et
(h) déterminer si, oui ou non, la sortie des données d'image en couleurs est possible et empêcher la réception des données d'image en couleurs lorsque la sortie des données d'image en couleurs est impossible.
